# DEMANDE DE BREVET EUROPEEN

(11) **EP 0 856 623 A1**
(43) Date de publication de la demande: **05.08.1998**
(21) Numéro de dépôt: 98400091.9
(22) Date de dépôt: 19.01.1998
(51) Int. Cl.: E05B 17/04, F16D 3/26

(54) **Dispositif mécanique de commande de condamnation extérieure d'une serrure de porte latérale de véhicule**

(30) Priorité: 04.02.1997 FR 9701229
(71) Demandeur: Meritor Light Vehicle Systems-France, 92082 Paris La Defense 2 (FR)
(72) Inventeur: Grandjean, Richard Claude, 88100 Ste Marguerite (FR)
(74) Mandataire: Martin, Jean-Paul

(57) **Abrégé**

Ce dispositif comprend un barillet rotatif (11) équipé d'un élément (16) de transmission de son mouvement de rotation à un levier de la serrure, une tringle ou rame (7) de liaison entre le barillet et une clé (5) d'actionnement manuel; il est caractérisé en ce qu'il comprend une noix (9) disposée à l'intérieur du barillet rotativement autour d'un axe (YY) perpendiculaire à l'axe de rotation (ZZ) du barillet, en ce que la rame est articulée, par l'une (8) de ses extrémités intérieure à la noix, autour d'un troisième axe (XX) perpendiculaire aux axes de rotation de la noix et du barillet, l'ensemble formant un joint d'accouplement universel. Grâce à cet agencement d'encombrement très réduit, la rame (7) peut être introduite en aveugle par un opérateur à l'intérieur de la portière jusqu'au barillet (11) dans un cône de guidage de large amplitude, ce qui facilite considérablement le montage du dispositif pour différents modèles de carrosserie de véhicule avec une même serrure standard.

## Description

La présente invention a pour objet un dispositif mécanique de commande de condamnation extérieure d'une serrure de porte latérale de véhicule, du type comprenant un barillet rotatif équipé d'un élément de transmission de son mouvement de rotation à un levier de la serrure, et une tringle ou rame de liaison entre le barillet et une clé d'actionnement manuel.

Pour une même serrure de porte latérale, le positionnement relatif entre cette serrure et son verrou d'actionnement par la clé peut être très variable selon les modèles de carrosseries. Le verrou recevant la clé d'actionnement ainsi que la tringle ou rame associée de commande de la condamnation extérieure de la serrure doivent donc pouvoir être disposés dans un volume, de forme conique, aboutissant au barillet de commande de la serrure, en conservant de bons contacts mécaniques. Or jusqu'à présent les systèmes mécaniques de liaison utilisés, entre le verrou recevant la clé sur le panneau extérieur de la porte et le barillet de commande de la condamnation extérieure, ne permettent qu'un débattement angulaire effectif relativement faible. Ceci constitue une gêne en raison du nombre élevé de géométries de carrosseries pour une même serrure.

L'invention a donc pour but de proposer un dispositif mécanique de liaison entre le verrou extérieur et le barillet de commande de condamnation qui soit agencé de manière à accroître notablement l'amplitude du débattement angulaire possible permettant l'introduction du verrou et de la rame associés, en "aveugle" dans la portière après montage de la serrure. En d'autres termes l'invention vise à faciliter le positionnement en aveugle par l'opérateur des rames des verrous d'une même serrure standard pour différents modèles de véhicule.

Conformément à l'invention, le dispositif mécanique de commande de condamnation extérieure d'une serrure de porte latérale de véhicule comprend une noix disposée à l'intérieur du barillet rotativement autour d'un axe perpendiculaire à l'axe de rotation du barillet, et la rame est articulée, par l'une de ses extrémités intérieures à la noix, autour d'un troisième axe perpendiculaire aux axes de rotation de la noix et du barillet, l'ensemble formant un joint d'accouplement universel.

L'adjonction et l'intégration d'une noix dans le barillet permet d'accroître considérablement l'amplitude du débattement angulaire possible pour l'introduction en aveugle, entre les deux panneaux de porte, de la rame et du verrou, par rapport aux dispositifs utilisés jusqu'à présent, et ce avec un encombrement particulièrement réduit.

En effet le dispositif de liaison selon l'invention autorise une articulation de la rame dans les trois dimensions, autour des trois axes précités.

Suivant une caractéristique de l'invention, dans le barillet est ménagé un logement adapté pour recevoir la noix et profilé pour permettre sa rotation, et le barillet est munis de moyens de prépositionnement angulaire de la noix.

Suivant un mode de réalisation de l'invention, le dispositif comprend un capot de protection de la serrure conformé en cône, dont le sommet entoure le barillet, ce capot conique permettant le guidage et l'introduction de la rame en aveugle dans la noix intérieure au barillet, en constituant une sorte d'entonnoir.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en perspective d'une forme de réalisation du dispositif mécanique de commande de condamnation extérieure d'une serrure de porte latérale de véhicule conforme à l'invention.

La figure 2 est une vue en perspective éclatée partielle, à échelle agrandie, du dispositif de commande de condamnation extérieure de la figure 1.

La figure 3 est une vue en perspective du dispositif de commande de la figure 2 représenté à l'état assemblé.

Les figures 4, 5, 6, 7, 8, 9 sont des vues en élévation en bout ou en perspective à échelle réduite de différentes positions angulaires des éléments constitutifs du dispositif de commande des figures 2 et 3.

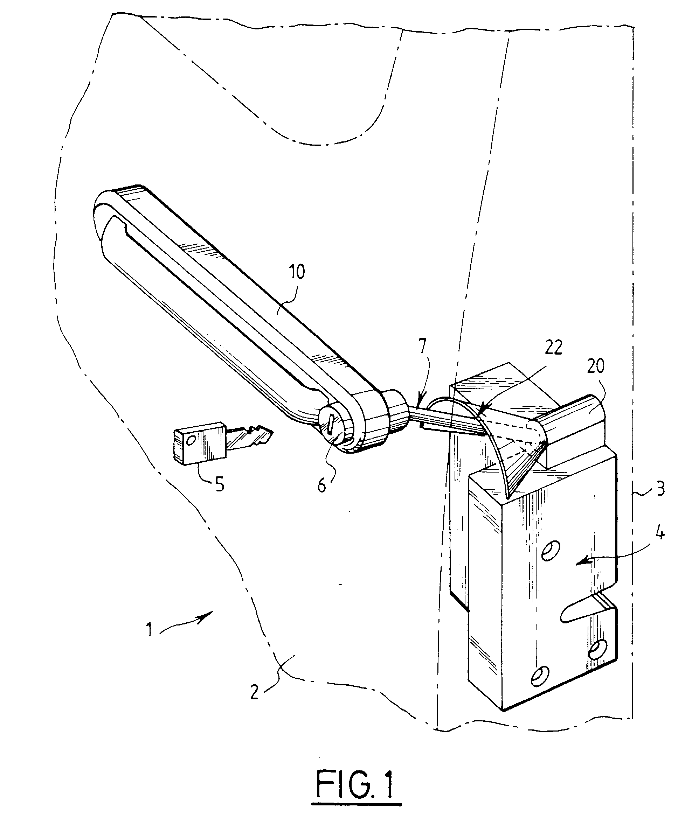

On voit à la figure 1 une porte latérale 1 d'un véhicule non représenté, comportant un panneau extérieur 2 et un panneau intérieur 3 entre lesquels est disposée une serrure 4.

A cette serrure est associé un dispositif mécanique de commande de condamnation extérieure au moyen d'une clé manuelle 5. Ce dispositif de commande comprend un barillet 6 de réception de la clé 5, monté à l'extrémité d'une poignée 10 d'ouverture extérieure et traversant le panneau extérieur 2, et une tringle ou rame 7 dont une extrémité est articulée de manière connue en soi au barillet 6. L'extrémité opposée 8 de la rame 7 est articulée à l'intérieur d'une noix 9 disposée à l'intérieur d'un barillet 11 logé dans un capotage 20 de la serrure.

L'extrémité 8 de la rame 7 constitue une fourche dont les deux bras sont eux-mêmes articulés sur une palette terminale cylindrique 12 autour d'un axe de rotation XX perpendiculaire à l'axe longitudinal de la rame 7. La palette cylindrique 12 présente deux faces latérales 12a raccordées à sa périphérie cylindrique 12b par un chanfrein annulaire 12c.

La noix 9 est disposée à 'intérieur du barillet 11 rotativement autour d'un axe YY perpendiculaire à l'axe XX d'articulation de la rame 7 sur la palette 12 ainsi qu'à un axe ZZ de rotation du barillet cylindrique 11. Ainsi les trois éléments 7, 9 et 11 sont articulés autour des trois axes XX, YY et ZZ dans les trois directions de l'espace, et forment un joint d'accouplement universel.

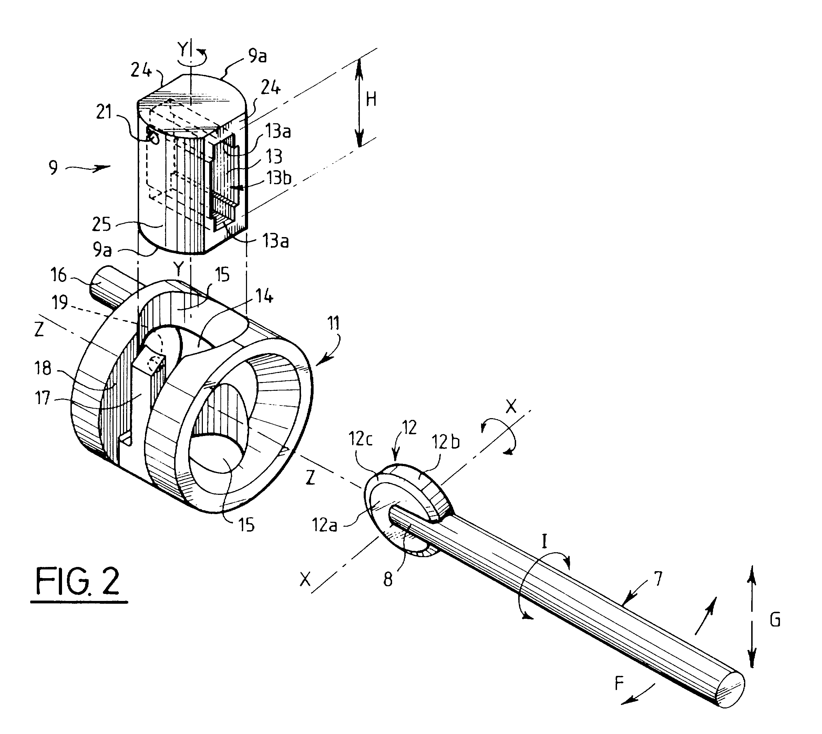

Dans la noix 9 est agencé un logement 13 de réception de l'extrémité (8, 12) de la rame 7, ce logement ayant un contour approximativement rectangulaire s'étendant dans une direction perpendiculaire à l'axe XX. Les extrémités supérieure et inférieure 13a du logement 13 ont une section transversale légèrement supérieure à la distance entre les faces 12a de la palette 12, afin que ces faces puissent prendre appui sur les parois des extrémités 13a et transmettre à la noix 9 un couple de rotation de la rame 7 autour de l'axe YY. La partie intermédiaire 13b du logement 13 a une largeur sensiblement supérieure à celle des parties terminales 13a, pour permettre l'introduction des bras de la fourche 8 lorsque la palette 12 est introduite à l'intérieur de la noix 9. Cette dernière peut donc être actionnée en rotation autour de son axe YY par des rotations de la rame 7 autour de cet axe (double flèche F sur la figure 2).

La hauteur H du logement 13 est sensiblement égale au diamètre de la palette 12, sur laquelle la rame 7 peut s'articuler autour de l'axe XX avec un débattement angulaire approprié.

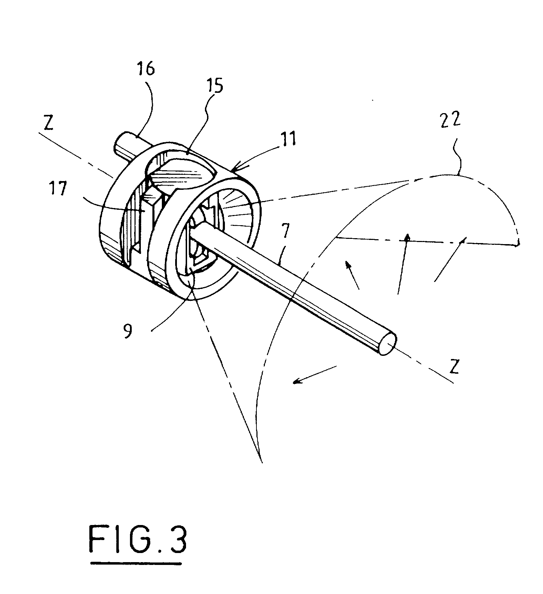

Le barillet 1 1 présente une surface extérieure cylindrique et un logement intérieur transversal 14 adapté pour recevoir la noix 9 et profilé pour permettre sa rotation dans le logement 14 autour de l'axe YY. Le barillet 11 est donc essentiellement constitué d'un tronçon cylindrique dimensionné pour permettre l'introduction de la noix 9 dans sa position représentée à la figure 3, et l'accouplement de la noix avec le barillet 1 1 en rotation autour de l'axe ZZ. Le logement 14 débouche à l'extérieur du barillet 11 par des ouvertures latérales 15 de la paroi de celui-ci, par l'une desquelles peut être introduite la noix 9. La face terminale du barillet 11 opposée à la noix 9, située du côté de l'intérieur de la serrure 4, est équipée d'un ergot 16 de transmission du mouvement de rotation du barillet 11 à un levier non représenté de la serrure, d'une manière connue en soi et qui ne nécessite pas de description.

Le barillet 11 est avantageusement muni de moyens de prépositionnement angulaire de la noix 9 dans son logement 14. Dans le mode de réalisation représenté, ces moyens comportent une patte 17 flexible élastiquement, découpée dans un évidement 18 d'une paroi latérale du logement 15 de la noix 9. Cette patte flexible 17 est pourvue à son extrémité libre 18 d'un bossage 19 dirigé vers l'intérieur du logement 14, et adaptée pour pouvoir s'introduire dans un trou correspondant 21 de la noix 9.

L'extrémité de la rame 7 constituée par sa palette 12 et la fourche 8, peut subir dans le logement 13 de la noix 9 un débattement axial, suivant l'axe ZZ de rotation du barillet 11, ainsi qu'un débattement angulaire dans le plan défini par les axes de rotation ZZ et YY, ce débattement étant indiqué par la double flèche G (figure 2).

Le dispositif comprend complémentairement un capot 22 de protection de la serrure 4, conformé en cône ou en entonnoir tronqué (figure 1) dont le sommet entoure l'entrée du barillet 11 et qui est disposé au-dessus de la serrure 4. Ce capot ou demi-entonnoir 22 a sa grande base proche du panneau extérieur 2 autour du barillet 6. La rame 7 peut donc être introduite en aveugle à l'intérieur du cône 22, entre les panneaux 2 et 3 jusqu'à ce que l'extrémité 8, 12 de la rame 7 vienne s'engager dans le logement 13 de la noix 9, préalablement disposée à l'intérieur du barillet 11.

L'agencement du dispositif de commande selon l'invention permet de le rendre très compact et donc de loger entre les deux panneaux (2, 3) un entonnoir de guidage 22 en aveugle de large ouverture angulaire (60 degrés environ). Ceci rend possible une introduction en aveugle aisée de la rame 7 jusqu'au barillet 11, quel que soit le modèle de véhicule pour une même serrure standard 4.

La transmission du couple rame 7 / barillet 11, lorsqu'elle est effectuée avec un désalignement angulaire, est hétérocinétique.

Lorsque l'utilisateur introduit la clé 5 dans le barillet de clé 6 et actionne la rame 7, celle-ci peut, en fonction de sa position dans l'espace, transmettre au barillet 11, via la palette 12 et la noix 9, un mouvement complexe tridimensionnel ayant des composantes suivant les trois axes XX, YY et ZZ.

Si la rame 7 bascule uniquement autour de l'axe XX, (double flèche G), la palette 12, la noix 9 et le barillet 11 restent immobiles.

Si la rame 7 est actionnée uniquement en rotation autour de l'axe YY (double flèche F), elle entraîne par la palette 12 la noix 9 en rotation autour de l'axe YY dans son logement 14, en libérant la noix de la patte 17, tandis que le barillet 11 reste immobile.

Si enfin la rame 7 est actionnée afin de tourner autour de l'axe ZZ (double flèche I), la palette 12 entraîne la noix 9 qui bascule et entraîne, par ses extrémités 9a engagées dans les ouvertures 15, le barillet 11 autour de l'axe ZZ.

En fonction de la position dans l'espace du barillet de clé 6 et de la rame 7 après montage, ces trois composantes du mouvement peuvent se combiner dans des rapports variables.

L'ergot 16 d'entraînement linéaire du levier de condamnation de la serrure est excentré de l'axe principal ZZ du barillet 11. Dans sa position de non-actionnement de la condamnation de la serrure, la noix 9 est placée par rapport à la patte flexible 17 de manière que le bossage 19 soit introduit dans le trou d'indexation 21, tout en autorisant la rotation de la noix 9 lorsque la rame 7 est actionnée.

Les formes des composants 7, 9, 11 du dispositif de commande qui vient d'être décrit permettent de les réaliser soit en métal, soit en matière plastique, en fonction des couples et des contraintes auxquels ils sont soumis.

Ce dispositif de commande, adapté à une serrure 4 de porte latérale 1, peut garantir de manière fiable et avec un couple élevé,une liaison d'accouplement ergot 16 - serrure 4 dans le cadre d'un désalignement tridimensionnel. La conception standard du dispositif décrit et son dimensionnement autorisent une rotation de ± 75° environ du barillet 11 autour de son axe ZZ, avec un désalignement angulaire de la rame 7 compris dans un cône 22 de 60° environ, et avec une dispersion axiale suivant l'axe ZZ de sensiblement ± 2mm.

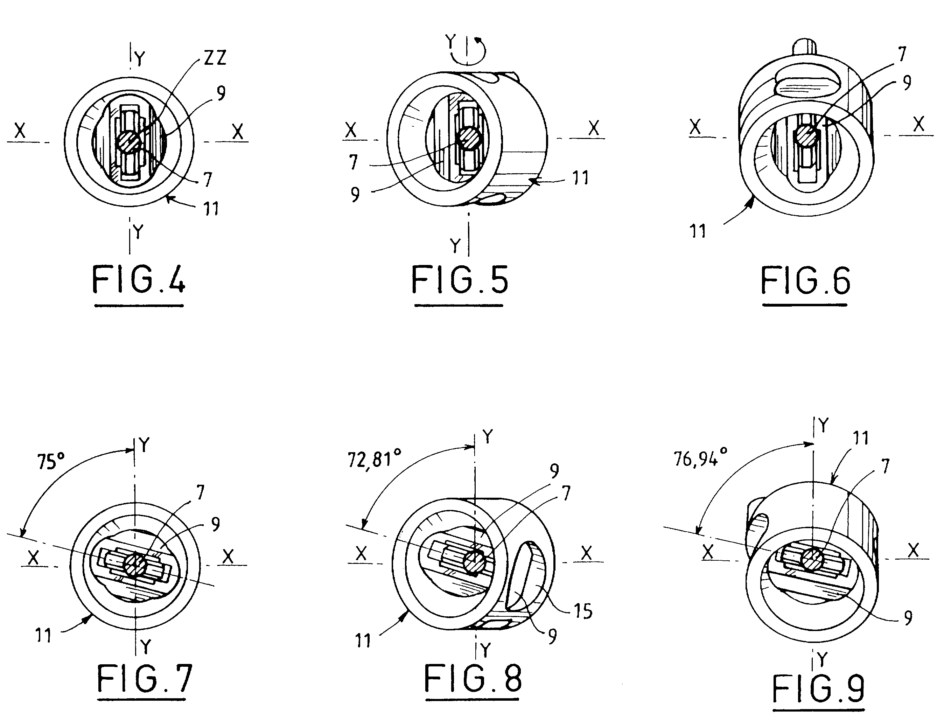

On a représenté aux figures 4 à 9 différentes positions relatives possibles des constituants du dispositif de commande selon l'invention.

A la figure 4 la rame 7 est disposée en position repos suivant l'axe ZZ et sa palette 12 dans le plan YY - ZZ, l'axe YY étant supposé vertical. La figure 7 représente le même ensemble qu'en figure 4, mais après une rotation de 75° autour de l'axe ZZ du barillet 11.

A la figure 5 le dispositif est dans une position où la rame 7 et la noix 9 sont positionnées au repos suivant un angle de 30° autour de l'axe YY. La figure 8 représente le même ensemble qu'en figure 5 après que la rame ait effectué une rotation de 75° autour de son axe de symétrie, ce qui correspond à une rotation de 72,81° du barillet 11 autour de l'axe ZZ.

A la figure 6, le dispositif est dans une position où la rame 7 et la noix 9 sont positionnées au repos suivant un angle de 30° autour de l'axe XX. La figure 9 représente le même ensemble qu'en figure 6 après que la rame 7 ait effectué une rotation de 75° autour de son axe de symétrie, ce qui correspond à une rotation de 76,94° du barillet 11 autour de l'axe ZZ.

L'invention n'est pas limitée à la forme de réalisation décrite et peut comporter des variantes d'exécution. Ainsi dans le logement 13 de la noix 9 il peut être prévu des lèvres (non représentées) en un matériau souple, interposées entre la paroi de ce logement 13 et les faces 12a de la palette 12, afin d'assurer une fonction anti-bruit. De même le prépositionnement angulaire de la noix 9 à l'intérieur du logement 14, 15 peut être assuré par tout moyen équivalent au clip 17 représenté.

## Revendications

1. Dispositif mécanique de commande de condamnation extérieure d'une serrure (4) de porte latérale (1) de véhicule, comprenant un barillet rotatif (11) équipé d'un élément (16) de transmission de son mouvement de rotation à un levier de la serrure, et une tringle ou rame (7) de liaison entre le barillet et une clé (5) d'actionnement manuel, caractérisé en ce qu'il comprend une noix (9) disposée à l'intérieur du barillet rotativement autour d'un axe (YY) perpendiculaire à l'axe de rotation (ZZ) du barillet, en ce que la rame est articulée, par l'une (8) de ses extrémités intérieure à la noix, autour d'un troisième axe (XX) perpendiculaire aux axes de rotation de la noix et du barillet, l'ensemble formant un joint d'accouplement universel.

2. Dispositif selon la revendication 1, caractérisé en ce que dans le barillet (11 ) est ménagé un logement (14, 15) adapté pour recevoir la noix (9) en autorisant une rotation de celle-ci autour de son axe longitudinal (YY) et profilé pour permettre un accouplement en rotation de la noix avec le barillet afin de faire toumer ce demier autour de son axe longitudinal (ZZ), et en ce que le barillet est muni de moyens (17, 19) de prépositionnement de la noix (9) dans le logement (14, 15) avec les extrémités (9a) de ladite noix engagées dans des ouvertures opposées (15) de la paroi du barillet.

3. Dispositif selon la revendication 2, caractérisé en ce que les moyens de prépositionnement angulaire de la noix (9) comportent une patte (17) flexible élastiquement, découpée dans un évidement (18) d'une paroi latérale du logement (14) de la noix et pourvue à son extrémité libre d'un bossage (19) adapté pour venir s'introduire dans un trou correspondant (21) de la noix.

4. Dispositif selon l'une des revendications 1 à 3, caractérisé en ce que dans la noix (9) est agencé un logement (13) de réception de l'extrémité (8,12) de la rame (7) avec un débattement axial suivant l'axe de rotation (ZZ) du barillet (11 ) et un débattement angulaire de la rame (7) dans le plan défini par les axes de rotation (ZZ, YY) du barillet (11) et de la noix (9).

5. Dispositif selon la revendication 4, caractérisé en ce que l'extrémité de la rame (7) comporte une palette cylindrique (12) articulée dans une fourche terminale (8) de la rame, autour d'un axe (XX) et dont les faces latérales (12a) sont en appui sur les parois (13b) du logement (13) de la noix (9), ce logement étant adapté pour pouvoir contenir la palette et pour permettre un débattement angulaire approprié de la rame par rapport à l'axe (XX) de la palette disposée dans la noix.

6. Dispositif selon l'une quelconque des revendications précédentes, caractérisé en ce qu'il comprend un capot (22) de protection de la serrure 4) conformé en cône dont le sommet entoure le barillet (11), ce capot conique permettant l'introduction de la rame (7) en aveugle dans la noix (9) intérieure au barillet (11).

7. Dispositif selon la revendication 6, caractérisé en ce que le barillet (11), la noix (9) et la rame (7) sont dimensionnés afin d'autoriser une rotation de ± 75 degrés environ du barillet avec un désalignement angulaire de la rame compris dans un cône de 60 degrés environ et avec une dispersion axiale de sensiblement ± 2mm.

8. Dispositif selon les revendications 4 et 5, caractérisé en ce que le logement (13) présente des extrémités (13a) dont la section transversale est légèrement supérieure à la distance entre les faces latérales (12a) de la palette, destinées à prendre appui sur les parois de ces extrémités (13a) pour accoupler la palette à la noix (9).
